# EUROPÄISCHE PATENTSCHRIFT

(11) **EP 3 857 256 B1**
(45) Veröffentlichungstag und Bekanntmachung des Hinweises auf die Patenterteilung: **27.12.2023**
(21) Anmeldenummer: 20717805.4
(22) Anmeldetag: 01.04.2020
(51) Int. Cl.: G01S 7/40, G01S 13/931, G01S 7/02

(54) **VERFAHREN ZUM ERFASSEN VON VERKEHRSTEILNEHMERN**
METHOD FOR DETECTING ROAD USERS
PROCÉDÉ DE DÉTECTION D'USAGERS DE LA VOIE PUBLIQUE

(30) Priorität: 06.05.2019 DE 102019111679
(43) Veröffentlichungstag der Anmeldung: 04.08.2021
(73) Patentinhaber: S.M.S. Smart Microwave Sensors GmbH, 38108 Braunschweig (DE)
(72) Erfinder: MENDE, Ralph, 38108 Braunschweig (DE)
(74) Vertreter: Gramm, Lins & Partner Patent- und Rechtsanwälte PartGmbB
(86) Internationale Anmeldenummer: PCT/EP2020/059287
(87) Internationale Veröffentlichungsnummer: WO 2020/224876

(56) Entgegenhaltungen:
- EP-A1- 3 173 812
- DE-A1-102012 021 212
- US-A1- 2017 269 196
- US-A1- 2018 348 365

## Beschreibung

Die Erfindung betrifft ein Verfahren zum Erfassen von Verkehrsteilnehmern entlang wenigstens eines bekannten Bereiches eines Verkehrsweges mittels wenigstens eines Radarsensors, der wenigstens eine Sendeeinrichtung für Radarstrahlung und wenigstens eine Empfangseinrichtung für Radarstrahlung aufweist und über und/oder neben dem Verkehrsweg an einem Mast, einem Schild oder einer Ampelanlage angeordnet ist, sowie zum Erfassen einer Störung, in deren Fall eine Erfassung von Verkehrsteilnehmern nicht oder nicht optimal möglich ist.

Verkehrsteilnehmer werden heute entlang unterschiedlichster Verkehrswege zu Land, zu Wasser und in der Luft erfasst. Dabei geht es oft um statistische Auswertung der Menge und Art der Verkehrsteilnehmer und/oder um die Steuerung der Verkehrsflusses entlang wenigstens eines Verkehrsweges.

Der Verkehrsfluss entlang von Verkehrswegen, insbesondere an sich kreuzenden Verkehrswegen, beispielsweise Kreuzungen oder Einmündungen, wird heute oftmals von elektronisch arbeitenden Systemen gesteuert, die beispielsweise Ampelschaltungen, Vorfahrtsregelungen und/oder Geschwindigkeitsbeschränkungen den Verkehrsbedingungen anpassen. Dazu ist es notwendig, die aktuelle Verkehrssituation zu detektieren. Dies geschieht in vielen Fällen durch Radarsensoren, die Radarstrahlung in Form von Sendesignalen aussenden, sodass die Sendesignale von Verkehrsteilnehmern, beispielsweise Kraftfahrzeugen, reflektiert werden. Diese reflektierte Radarstrahlung wird in Form von Empfangssignalen detektiert. Sie enthält Informationen über den Abstand, die Radialgeschwindigkeit, die Bewegungsrichtung und/oder der Größe des Verkehrsteilnehmers.

Aus dem Stand der Technik sind unterschiedlichste Formen von Sendesignalen bekannt. Es können beispielsweise Frequenzrampen verwendet werden, die sich wiederholen und identisch ausgebildet sind oder unterschiedlich ausgebildet sind und abwechselnd oder gleichzeitig ausgesandt werden. Entsprechende Sendesignale sind beispielsweise aus der DE 10 2013 008 607 A1 und der DE 10 2017 105 783 A1 bekannt. Als Sendesignale können auch Signale verwendet werden, die durch, vorzugsweise digitale, PMCW (Phase Modulated Continuous Wave) Modulation erzeugt werden. Dabei werden Signale phasenmoduliert auf eine Trägerwelle moduliert, die anschließend als Sendesignal verwendet werden kann.

Mit heutigen Verfahren ist es möglich, unterschiedliche Arten von Verkehrsteilnehmern, beispielsweise Kraftfahrzeuge, Motorräder und Lastkraftwagen, aber auch Fußgänger oder Radfahrer voneinander zu unterscheiden und auf der Grundlage der für unterschiedliche Typen von Verkehrsteilnehmern hinterlegten Daten den Verkehrsfluss zu steuern. Dies kann beispielsweise durch die Schaltung von Ampelanlagen und/oder Öffnen oder Schließen zusätzlicher Fahrspuren oder dem Erlassen oder Aufheben von Geschwindigkeitsbegrenzungen bestehen.

Die Verwendung von Radarsensoren hat beispielsweise gegenüber der Verwendung von Kameras, die im Bereich des sichtbaren Lichtes arbeiten, den Vorteil, dass Radarsensoren tageslichtunabhängig funktionieren und auch bei Nebel und Dunkelheit funktionieren. Dennoch kann es auch bei der Verwendung von Radarsensoren zur Überwachung und Steuerung eines Verkehrsflusses zu Störungen beispielsweise durch Wettereinflüsse oder Interferenz mit anderen Quellen von Radarstrahlung kommen. Im Falle einer Störung ist die Erfassung von Verkehrsteilnehmern nicht oder zumindest nicht optimal möglich. Eine Störung kann einen reibungslosen Verkehrsfluss behindern oder sogar verhindern und insbesondere für die beteiligten Verkehrsteilnehmer auch Gefahren hervorrufen.

Aus der US 2017/0269196 A1 ist ein System bekannt, mit dem ermittelt werden soll, ob ein Radarsensor, der in einem Kraftfahrzeug verbaut ist, eine Fehlfunktion aufweist. Auch die DE 10 2012 021 212 A1 befasst sich mit Radarsensoren, die in Kraftfahrzeugen verwendet werden. Es wird beschrieben, wie ein solcher Sensor verwendet wird. Eine Fehlerdetektion findet nicht statt. US 2018/348365 A1 beschreibt Radarsensoren, die statisch neben einem Verkehrsweg angeordnet sind, um Kraftfahrzeuginformationen über andere Verkehrsteilnehmer zukommen zu lassen.

Der Erfindung liegt daher die Aufgabe zugrunde, ein Verfahren zum Steuern eines Verkehrsflusses entlang wenigstens eines Verkehrsweges so zu verbessern, dass Störungen bei der Erfassung der Verkehrsteilnehmer frühzeitig erkannt werden und so reagiert werden kann, dass die Verkehrssicherheit erhöht wird.

Die Erfindung löst die gestellte Aufgabe durch ein Verfahren zum Erfassen von Verkehrsteilnehmern entlang wenigstens eines Verkehrsweges, wobei das Verfahren folgende Schritte aufweist:
- Aussenden von Sendesignalen mittels wenigstens einer Sendeeinrichtung für Radarstrahlung,
- Detektieren von Empfangssignalen mittels wenigstens einer Empfangseinrichtung für Radarstrahlung,
- Mischen der Sendesignale und der Empfangssignale zu Basisbandsignalen und Errechnen einer Detektionsmatrix aus den Basisbandsignalen und Auswerten der Detektionsmatrix in einem Auswertemodul einer elektronischen Datenverarbeitungseinrichtung, wobei Peaks der Detektionsmatrix Objekten zugeordnet werden,
- Prüfen, ob ein Störungskriterium erfüllt ist, in einem Diagnosemodul, wobei die ausgewertete Detektionsmatrix und die Basisbandsignale herangezogen werden,
- Generieren von Signalen aus den Ergebnissen der Auswertung im Auswertemodul und der Prüfung im Diagnosemodul und
- Übermitteln der Signale an ein Steuerungsmodul einer elektronischen Datenverarbeitungseinrichtung.

Erfindungsgemäß wird folglich von wenigstens einer Sendeeinrichtung für Radarstrahlung, die vorteilhafterweise Teil eines Radarsensors ist, Radarstrahlung in Form von Sendesignalen ausgesendet. Diese können, wie bereits dargelegt, unterschiedliche Formen aufweisen. Sie werden von verschiedenen Verkehrsteilnehmern, die sich auf dem überwachten Teilstück des wenigstens einen Verkehrsweges befinden, unterschiedlich stark reflektiert, wobei die Stärke der Reflexion insbesondere von der Größe des Verkehrsteilnehmers und von dessen Entfernung von der Sendeeirichtung und der Empfangseinrichtung abhängt. Ein Teil der reflektierten Radarstrahlung wird in Form von Empfangssignalen zurück zum Radarsensor, insbesondere zu einer Empfangseinrichtung für Radarstrahlung, die Teil eines Radarsensors ist, reflektiert. Die Empfangssignale werden mittels wenigstens einer Empfangseinrichtung für Radarstrahlung, die vorzugsweise ebenfalls Teil des wenigstens einen Radarsensors ist, detektiert. Die Sendesignale, die von der wenigstens einen Sendeeinrichtung für Radarstrahlung ausgesandt wurden und die Empfangssignale, die von der wenigstens einen Empfangseinrichtung für Radarstrahlung detektiert wurden, werden zu Basisbandsignalen gemischt, aus denen die Detektionsmatrix errechnet wird. Eine Detektionsmatrix ist beispielsweise eine Range-Doppler-Matrix, die durch eine zweifache Fourier-Transformation der Basisbandsignale errechnet wird. Handelt es sich bei den ausgesandten Sendesignalen nicht um sich wiederholende Frequenzrampen, sondern beispielsweise um vorzugsweise digital phasenmodulierte Signale, kann die Range-Doppler-Matrix auch durch eine Korrelation (Range) und eine Fourier-Transformation (Doppler) errechnet werden. Das Verfahren ist aus dem Stand der Technik bekannt und dem Fachmann geläufig. Andere mögliche Detektionsmatrizen sind beispielsweise Range-Time-Matrizen, bei denen nur eine Fourier-Transformation durchgeführt wird, oder eine Range-Winkel-Matrix. Vorzugsweise werden mehrere Detektionsmatrizen in einem, vorzugsweise in jedem Messzyklus errechnet und verwendet, beispielsweise in unterschiedlichen Winkelbereichen und/ oder -richtungen.

Die Detektionsmatrix wird dann in einem Auswertemodul einer elektronischen Datenverarbeitungseinrichtung ausgewertet. In der Detektionsmatrix wird spektrale Energie (Signalenergie) verschiedenen Informationen zugeordnet. Während auf einer Achse beispielsweise einer Range-Doppler-Matrix der Abstand ("range") aufgetragen ist, ist auf der anderen Achse die Doppler-Frequenz, und damit eine Information über die Radialgeschwindigkeit des die Sendesignale reflektierenden Verkehrsteilnehmers aufgetragen. Das Vorhandensein von Signalenergie, die vorzugsweise deutlich, besonders bevorzugt um mehr als 20 dB über dem Rauschen der Matrix an einer spektralen Position in einer Zelle der Range-Doppler-Matrix liegt, bedeutet folglich, dass die Empfangssignale aus einer Reflexion von Sendesignalen an einem Gegenstand, insbesondere einem Verkehrsteilnehmer entstanden sind, der einen bestimmten Abstand ("range") und eine bestimmte Radialgeschwindigkeit auf die wenigstens eine Empfangseinrichtung zu oder von ihr weg aufweist, die sich aus der entsprechenden Doppler-Frequenz ergibt. Allerdings ist die Zuordnung zwischen Radialgeschwindigkeit und Dopplerfrequenz gegebenenfalls mehrdeutig, wofür aus dem Stand der Technik Methoden zur Behebung bekannt sind.

Signalenergie bei einem solchen Element der Detektionsmatrix, insbesondere der Range-Doppler-Matrix wird als "Peak" bezeichnet, wobei die verschiedenen Peaks der Range-Doppler-Matrix unterschiedlichen Objekten, insbesondere Verkehrsteilnehmern, zugeordnet werden. Dabei kann einem Objekt ein einziger Peak oder ein Bereich der Range-Doppler-Matrix mit mehreren Peaks zugeordnet werden.

Erfindungsgemäß wird in einem Diagnosemodul geprüft, ob ein Störungskriterium erfüllt ist. Auf der Grundlage der Ergebnisse der Auswertung der Detektionsmatrix in dem Auswertemodul und der Prüfung im Diagnosemodul werden dann Signale generiert, die an das Steuerungsmodul übermittelt werden. Dabei werden vorzugsweise auch Ergebnisse einer Auswertung der Basisbandsignale im Zeitbereich berücksichtigt.

Das Steuerungsmodul ist eingerichtet, die Signale beispielsweise statistisch auszuwerten und/oder den Verkehrsfluss entlang des wenigstens einen Verkehrsweges zu steuern. Im letzten Fall handelt es sich um ein Verfahren zum Steuern des Verkehrsflusses entlang des wenigstens einen Verkehrsweges.

Bevorzugt sind das Auswertemodul und/oder das Diagnosemodul Teile einer elektronischen Datenverarbeitungseinrichtung, die Teil des Radarsensors ist, der auch die Sendeeinrichtung und/oder die Empfangseinrichtung aufweist. Das Steuerungsmodul ist bevorzugt nicht Teil des Sensors, sondern beispielsweise Teil eines Steuerungscomputers, der verwendet wird, um den Verkehrsfluss zu steuern. Natürlich kann auch das Steuerungsmodul Teil des Sensors sein. Es ist auch möglich, dass das Auswertemodul und/oder das Diagnosemodul nicht Teil des Radarsensors, sondern Teil einer anderen elektronischen Datenverarbeitungseinrichtung sind, zu der bevorzugt auch das Steuerungsmodul gehört.

Erfindungsgemäß werden zur Prüfung, ob ein Störungskriterium erfüllt ist, die ausgewertete Detektionsmatrix, vorzugsweise die ausgewertete Range-Doppler-Matrix und die Basisbandsignale herangezogen. Vorteilhafterweise ist beispielsweise ein Störungskriterium dann erfüllt, wenn beim Auswerten der Detektionsmatrix Regen und/oder Schnee und/oder eine Interferenz mit Signalen anderer Sendeeinrichtungen und/oder eine Veränderung der Position und/oder der Orientierung des jeweiligen Sensors detektiert wird.

Auch Niederschlag in Form von Regen und/oder Schnee reflektiert zumindest einen Teil der ausgesandten Sendesignale, und führt auf diese Weise zu einer bestimmten Art von Empfangssignalen. In der ausgewerteten Detektionsmatrix führt dies zu charakteristischen Effekten. So wird beispielsweise bei einer Range-Doppler-Matrix in einem Abstand ("Range") von wenigen Metern viel Signalenergie auftreten, da von der Vielzahl an Niederschlagselementen, also Regentropfen oder Schneeflocken, in diesem Bereich der Großteil der reflektierten Sendesignale reflektiert wird. Regentropfen und Schneeflocken in einem größeren Abstand reflektieren die bis dahin durchgedrungenen Sendesignale zwar auch, können aufgrund des dann zu großen Abstandes jedoch nicht eine nennenswerte Intensität an Empfangssignalen herbeiführen. Auch die Radialgeschwindigkeit des Niederschlages ist typisch, da Regentropen untereinander und Schneeflocken untereinander oft mit einer charakteristischen Geschwindigkeit zu Boden fallen. Je nach Windverhältnissen kann natürlich die Radialgeschwindigkeit auf den wenigstens einen Radarsensor zu oder von ihm weg beeinflusst werden. Auf diese Weise lassen sich Regen und/oder Schnee leicht und sicher detektieren.

Ist dies der Fall, wird ein Störungskriterium als erfüllt angesehen, da es für den Sensor nicht mehr oder zumindest nicht mehr zuverlässig möglich ist, Verkehrsteilnehmer sicher und eindeutig zu erkennen und gegebenenfalls unterschiedlichen Klassen zuzuordnen.

Vorzugsweise wird eine Mehrzahl von Detektionsmatrix, vorzugsweise von Range-Doppler-Matrizen verschiedener, bevorzugt aufeinander folgender Messzyklen ausgewertet. Sie werden gebildete aus Basisbandsignalen, die aus Sendesignalen und Empfangssignalen unterschiedlicher Messzyklen gemischt wurden. Dadurch ist es möglich, die bei der Auswertung der Mehrzahl der Detektionsmatrix ermittelten Objekte zueinander in Beziehung zu setzen und so eine Bewegung der Objekte nachzuverfolgen. Dadurch kann besser zwischen sich bewegenden Objekten, insbesondere Verkehrsteilnehmern, und statischen Zielen, beispielsweise Bauwerken, Schildern oder Ampeln unterschieden werden, als dies durch die Auswertung der Radialgeschwindigkeit möglich ist. Sich bewegenden Objekten kann somit eine Ist-Trajektorie zugeordnet werden, die insbesondere die Position des jeweiligen Objektes zu unterschiedlichen Zeitpunkten enthält. Vorteilhafterweise wird ein Störungskriterium als erfüllt angesehen, wenn eine vorbestimmte Anzahl, beispielsweise mindestens 10, mindestens 25 oder mindestens 50 dieser Ist-Trajektorien nicht einem in einer elektronischen Datenbank hinterlegten Verlauf folgt. Vorzugsweise muss diese vorbestimmte Anzahl an Ist-Trajektorien, die nicht dem hinterlegten Verlauf folgen, in einem vorbestimmten Zeitraum, beispielsweise innerhalb von 10 Minuten, innerhalb von 5 Minuten oder innerhalb von 2 Minuten auftreten, damit ein Störungskriterium erfüllt ist.

In der Regel ist der überwachte Bereich des wenigstens einen Verkehrsweges, in dem Verkehrsteilnehmer vorhanden sein können, die die ausgesandten Sendesignale in Richtung auf die wenigstens eine Empfangseinrichtung reflektieren können, bekannt. Er verfügt beispielsweise über mehrere Fahrspuren, in denen bestimmte Fahrtrichtungen vorherrschen und die einem vorbestimmten Verlauf folgen. Dieser Verlauf kann in einer elektronischen Datenbank hinterlegt sein. Das Aussenden der Sendesignale, das Empfangen der Empfangssignale, das Mischen der Signale zu Basis-Bandsignalen und das Bestimmen einer Detektionsmatrix, vorzugsweise einer Range-Doppler-Matrix sowie deren Auswertung werden in der Regel, wie bereits dargelegt nicht nur einmalig, sondern mehrfach nacheinander durchgeführt. Diese Verfahrensschritte können beispielsweise mehrere hundert Mal pro Sekunde durchgeführt werden. Einzelne Objekte können somit über einen längeren Zeitraum verfolgt werden. Dabei ändert sich gegebenenfalls der Geschwindigkeitsvektor und/oder der Ort, an dem das jeweilige Objekt detektiert wird. Auf diese Weise lässt sich eine Ist-Trajektorie des Objektes, und damit eines Verkehrsteilnehmers, bestimmen.

Vorzugsweise wird diese bestimmte Ist-Trajektorie mit den Trajektorien verglichen, die beispielsweise für unterschiedliche Fahrspuren des wenigstens einen Verkehrsweges hinterlegt sind. Weicht die aus den unterschiedlichen Detektionsmatrizen errechnete Ist-Trajektorie beispielsweise in einem Azimutwinkel oder einem Elevationswinkel, von der Soll-Trajektorie ab, die in der elektronischen Datenbank hinterlegt ist, ist dies ein deutliches Zeichen dafür, dass sich die Orientierung und/oder die Position des wenigstens einen Radarsensors, zumindest jedoch die Position und/oder Orientierung der wenigstens einen Empfangseinrichtung für Radarstrahlung verschoben hat. Der überwachte Bereich des Verkehrsweges hat sich auf diese Weise verändert, so dass keine verlässlichen Daten mehr ermittelt werden können oder dies zumindest nicht gewährleistet werden kann. In diesem Fall ist vorzugsweise ein Störungskriterium erfüllt.

Vorteilhafterweise wird ein maximales, ein minimales, ein mittleres Signal-zu-Rauschverhältnis und/oder der Median des Signal-zu-Rausch-Verhältnisses aus den Signal-zu-Rauschverhältnissen ausgewählter Peaks der Detektionsmatrix ermittelt. Ein Störungskriterium gilt dann als erfüllt, wenn das maximale, das minimale, das mittlere Signal-zu-Rauschverhältnis und/oder der Median des Signal-zu-Rausch-Verhältnisses einen vorbestimmten Grenzwert unterschreitet. Dieser vorbestimmte Grenzwert ist beispielsweise 100 dB, bevorzugt 50 dB, besonders bevorzugt 20 dB. Über die ausgewählten Peaks der Detektionsmatrix, beispielsweise der Range-Doppler-Matrixwird folglich das jeweilige Signal-zu-Rauschverhältnis ermittelt. Anschließend wird das Maximum, das Minimum, der Mittelwert und/oder der Median dieser Verhältnisse ermittelt und mit dem vorbestimmten Grenzwert verglichen. Ist das jeweilige Signal-zu-Rauschverhältnis kleiner als der vorbestimmte Grenzwert, wird angenommen, dass eine sichere Objekterkennung der einzelnen Verkehrsteilnehmer nicht oder nicht zuverlässig gewährleistet ist, so dass ein Störungskriterium erfüllt ist.

Bei den ausgewählten Peaks der Detektionsmatrix handelt es sich vorzugsweise um alle Peaks, die einem Objekt oder mehreren sich bewegenden Objekten zugeordnet werden konnten. Besonders bevorzugt handelt es alle Peaks, die einem sich bewegenden Objekt zugeordnet werden konnten. Alternativ dazu handelt es sich bei den ausgewählten Peaks um alle Peaks der verwendeten Detektionsmatrix.

Vorzugsweise wird bei der Auswertung der Detektionsmatrix, beispielsweise der Range-Doppler-Matrix ein Radarquerschnitt der Objekte, vorzugsweise der sich bewegenden Objekte ermittelt. Dies kann beispielsweise aus der Intensität der empfangenen Empfangssignale und der Intensität der gesendeten Sendesignale ermittelt werden, wobei bevorzugt auch der aus der Detektionsmatrixermittelte Abstand und/oder ein oder mehrere Winkel des jeweiligen Objektes berücksichtigt werden. Ein Störungskriterium ist bei dieser Ausgestaltung des Verfahrens erfüllt, wenn ein maximaler, ein minimaler und/oder ein durchschnittlicher Radarquerschnitt und/oder der Median aus den ermittelten Radarquerschnitten kleiner als ein vorbestimmter Grenzwert ist. Typische Werte für einen Radarquerschnitt sind beispielsweise etwa 1m² für einen Menschen, ca 10 m² für einen PKW und ca 100 m² für einen Lastkraftwagen. Je nach überwachtem Querschnitt wird der vorbestimmte Grenzwert für den durchschnittlichen Radarquerschnitt gewählt. Wird der jeweilige Grenzwert unterschritten, liegt in dieser Ausgestaltung des Verfahrens ein Störungskriterium vor.

Vorzugsweise wird der Radarquerschnitt aller Objekte, besonders bevorzugt aller sich bewegender Objekte bestimmt. Alternativ oder zusätzlich dazu können auch die Radarquerschnitte einer bestimmten Klasse von Objekten, beispielsweise aller Personenkraftwagen und/oder aller Lastkraftwagen bestimmt und zur Auswertung verwendet werden. In diesem Fall können unterschiedliche Grenzwerte für die Radarquerschnitte von Objekten unterschiedlicher Klassen verwendet werden.

In einer bevorzugten Ausgestaltung des Verfahrens verfügt die wenigstens eine Empfangseinrichtung über mehrere, vorzugsweise wenigstens drei, besonders bevorzugt wenigstens vier, weiter besonders bevorzugt wenigstens acht Empfangsantennen. Von einem Objekt reflektierte Empfangssignale erreichen diese Mehrzahl von Empfangsantennen zu unterschiedlichen Zeitpunkten. Die Empfangssignale der verschiedenen Empfangsantennen werden mit den ausgesandten Sendesignalen gemischt und aus den so entstandenen Basisbandsignalen werden Detektionsmatrizen, beispielsweise Range-Doppler-Matrizen gebildet. Aufgrund der unterschiedlichen Zeitpunkte, zu denen die Empfangssignale die verschiedenen Empfangsantennen erreichen, kommt es zu einer Phasenverschiebung zwischen den verschiedenen Empfangssignalen und damit zu unterschiedlichen Basisbandsignalen für die verschiedenen Detektionsmatrix. Bei den Fourier-Transformationen, die bei der Berechnung der Detektionsmatrix, insbesondere der Range-Doppler-Matrizen durchgeführt werden, entstehen komplexwertige Einträge, die eine komplexe Phase aufweisen. Die Phasendifferenz dieser Phasen zwischen zwei Empfangsantennen hängt dabei nur von deren Abstand ab. Empfangsantennenpaare, die den gleichen Abstand aufweisen haben auch die gleiche Phasendifferenz.

Vorzugsweise wird ein Maß für die Streuung dieser Phasendifferenzen, beispielsweise die Standardabweichung dieser Phasendifferenzen ermittelt. Ein Störungskriterium ist erfüllt, wenn die größte, die kleinste und/ oder eine mittlere Standardabweichung und/oder der Median der ermittelten Standardabweichungen einen vorbestimmten Grenzwert überschreitet, der beispielsweise 60°, bevorzugt 30°, besonders bevorzugt 5° beträgt.

Die Standardabweichung wird vorzugsweise für alle Peaks der Detektionsmatrix, besonders bevorzugt für die Peaks, die einem Objekt zugeordnet werden konnten berechnet. In einer besonders bevorzugten Ausgestaltung wird die Standardabweichung der Phasendifferent für alle Peaks der Detektionsmatrix berechnet, die sich bewegenden Objekten zugeordnet werden konnten. Die Berechnung erfolgt vorzugsweise in Richtung des Azimutalwinkels und/oder in Richtung des Elevationswinkels. Der Azimutalwinkel erstreckt sich dabei in einer Ebene, die senkrecht auf der Gravitationsrichtung steht. Der Elevationswinkel hingegen beschreibt einen Winkel relativ zu der Gravitationsrichtung.

Vorzugsweise wird die Anzahl der Objekte bestimmt, denen wenigstens ein Peak der Detektionsmatrix zugeordnet wurde. Vorzugsweise wird die Zahl der statischen Objekte bestimmt. Ein Störungskriterium gilt in diesem Fall dann als erfüllt, wenn die Anzahl einen vorbestimmten oberen Grenzwert überschreitet, wobei dieser beispielsweise 150, bevorzugt 100, besonders bevorzugt 75 beträgt, oder wenn die Anzahl einen vorbestimmten unteren Grenzwert unterschreitet, der vorzugsweise 10, bevorzugt 20, besonders bevorzugt 30 beträgt. Ist die Anzahl der ermittelten Objekte, denen wenigstens ein Peak der Detektionsmatrix zugeordnet werden konnte, größer als dieser vorbestimmte obere Grenzwert oder kleiner als der vorbestimmte untere Grenzwert, wird davon ausgegangen, dass dies entweder eine sehr ungewöhnliche Verkehrssituation ist, für die keine optimale Steuerungssignale für die Steuerung des Verkehrsflusses vorhanden sind, oder dass der Sensor, der die Radarstrahlen aussendet und die Empfangssignale empfängt, gestört arbeitet. Selbstverständlich sind diese Grenzwerte in Abhängigkeit des Verkehrsweges zu wählen, dessen Verkehrsfluss gesteuert wird. Bei einer Landstraße, die gegebenenfalls wenig befahren ist, kann der vorbestimmte obere Grenzwert kleiner, beispielsweise 50, 40 oder 30 sein, während bei einer großen Kreuzung mehrerer Verkehrswege, beispielsweise mehrerer mehrspurigen Straßen, ein größerer oberer Grenzwert von beispielsweise 200, 250 oder 300 angemessen sein kann. Ebenso kann bei einer gegebenenfalls wenig befahrenen Landstraße der vorbestimmte untere Grenzwert klein, beispielsweise 5 oder auch 0 sein. Bei einer großen Kreuzung mehrerer Verkehrswege kann auch ein vorbestimmter unterer Grenzwert von 40, 50 oder 60 angemessen sein und gewählt werden.

Werden lediglich oder auch statische Objekte gezählt, kann der jeweilige Grenzwert anhand der Anzahl der tatsächlich vorhandenen Objekte, beispielsweise Schilder oder Gebäude gewählt werden.

Vorteilhafterweise wird das Basisbandsignal noch vor der Berechnung der Detektionsmatrix, beispielsweise der Range-Doppler-Matrix auf für Interferenzstörungen charakteristische Merkmale untersucht. Vorzugsweise wird zur Erkennung dieser charakteristischen Merkmale geprüft, ob die Signalenergie und/oder die Signalamplitude einen vorbestimmten oder adaptiv veränderlichen Grenzwert überschreitet. Wird ein adaptiv gewählter Grenzwert verwendet, so wird dieser vorteilhafterweise an die vorherrschende Verkehrssituation angepasst, indem beispielsweise eine mittlere Signalenergie oder -amplitude, wofür beispielsweise eine Mittelwertberechnung oder eine Medianberechnung eingesetzt werden kann, aus der Historie abgeleitet und der Grenzwert beispielsweise durch Multiplikation dieses Wertes mit 8, 10 oder 12 ermittelt wird. Vorteilhafterweise kann aus einer optional nachfolgenden Analyse der Grenzwertüberschreitungen beispielsweise hinsichtlich Position, Breite und/oder zeitlicher Veränderung ein Maß zur Bestimmung der Interferenzintensität und/oder des vom Interferer belegten Frequenzbandes abgeleitet werden. Es ist jedoch auch möglich, die Interferenzintensität beispielsweise durch Beobachtung eines erhöhten Rauschpegels nach einer ersten Stufe der Fourier-Transformation bzw. Korrelation oder in der Detektionsmatrix festzustellen. Eine ausreichend hohe Interferenzintensität stellt dann ein Störungskriterium dar.

Vorteilhafterweise ist ein Störungskriterium in Form eines Sammel-Störungskriteriums erfüllt, wenn eine gewichtete Summe des maximalen, des minimalen, des mittleren Signals-zu-Rauschverhältnisses und/oder des Medians des Signal-zu-Rausch-Verhältnisses, des maximalen, des minimalen und/oder des durchschnittlichen Radarquerschnittes und/oder des Medians der berechneten Radarquerschnitte, der minimalen, der maximalen und/oder mittleren Standardabweichung und/oder des Medians der berechneten Standardabweichungen und/oder der Anzahl der Objekte und/oder der Interferenzintensität einen vorbestimmten Grenzwert überschreitet. Dieser Grenzwert ist nahezu frei wählbar und kann durch geeignete Gewichtungen der einzelnen Summanden verschoben werden. Dieser vorbestimmte Grenzwert ist beispielsweise -15, 10 oder 100 ist. Um die Rechnungen zu vereinfachen, können einzelne oder alle Summanden dieser gewichteten Summe auf Grenzwerte gesetzt oder separat skaliert werden, sollten sie diese über- oder unterschreiten.

So kann beispielsweise das maximale Signal-zu-Rauschverhältnis auf 5 dB, 10 dB oder 20 dB oder einen anderen passenden Wert angehoben werden, sollte es diesen unterschreiten. Das maximale Signal-zu-Rauschverhältnis kann auch auf 40 dB, 50dB oder 60 dB gesetzt werden, sollte es jeweils diesen Wert überschreiten. Das Signal-zu-Rausch-Verhältnis kann bevorzugt auch auf einen Bereich, beispielsweise 14 dB bis 50 dB eingeschränkt werden. Wird das lineare Verhältnis verwendet, kann das Verhältnis auf 5 bis 300 beschränkt werden. Wird diese Größe separat skaliert, wird der so begrenzte Bereich auf den Skalierungsbereich von 0 bis 100 skaliert. Selbstverständlich können auch andere Bereiche und Skalierungsbereiche verwendet werden.

Auf diese Weise werden die Rechnungen vereinfacht und Fehler durch übermäßig große oder kleine Werte weniger wahrscheinlich.

Der Wert für die minimale Standardabweichung kann beispielsweise auf 0 rad, 0,1 rad oder 0,2 rad gesetzt werden oder auf maximal 0,75 rad, 0,5 rad oder 0,4 rad begrenzt werden. Auch ein solcher Bereich kann für die gewichtete Summe auf einen Skalierungsbereich von 0 bis 100 skaliert werden.

Die Anzahl der möglichen Objekte kann ebenfalls auf einen Wert, beispielsweise höchstens 60 und mindestens 0 festgelegt werden, wobei auch dieser Bereich auf einen Skalierungsbereich, beispielsweise 0 bis 100 skaliert werden. Vorteilhafterweise wird die Größe auf den jeweiligen vorbestimmten Grenzwert festgesetzt, sollte sie diesen über- oder unterschreiten.

Innerhalb der gewichteten Summe können die Vorzeichen der jeweiligen Gewichtungen variieren. So ist beispielsweise die minimale Standardabweichung mit einem positiven, die Anzahl der Ziele sowie das maximale Signal-zu-Rauschverhältnis mit einem negativen Faktor versehen. Alternativ können die Faktoren selbstverständlich auch das jeweils entgegengesetzte Vorzeichen haben.

Unabhängig, ob die einzelnen Größen einzeln oder in einer gewichteten Summe das Störungskriterium bilden, sind sie bevorzugt über die Zeit gefiltert, so dass Ergebnisse, die aus der Auswertung einzelner Detektionsmatrizen oder einzelner Messzyklen stammen, nicht gleich zu einer Störungsmeldung führen oder ein Störungskriterium als erfüllt gelten lassen. Dies kann beispielsweise durch einen gegebenenfalls gewichteten gleitenden Mittelwert über die Zeit, also die Ergebnisse mehrerer vorzugsweise aufeinander folgender Messzyklen geschehen.

Erfindungsgemäß ist die wenigstens eine Sendeeinrichtung für Radarstrahlung und die wenigstens eine Empfangseinrichtung für Radarstrahlung jeweils Teil eines Radarsensors, wobei vorteilhafterweise durch wenigstens einen zusätzlichen (on-board) Sensor die Position und/oder die Orientierung und/oder die Geschwindigkeit und/oder die Beschleunigung des Radarsensors bestimmt wird. Um verlässliche Messwerte zu erhalten ist es notwendig, dass der wenigstens eine Radarsensor die Position, in der er eingerichtet wurde, und vorteilhafterweise auch die Orientierung in der er eingerichtet wurde, beibehält. Verändert sich diese Position, beispielsweise weil ein Mast oder Schild, an dem der Sensor befestigt wurde in einen Verkehrsunfall betroffen ist und beispielsweise umgefallen ist, ist nicht mehr sichergestellt, dass der Sensor den gewünschten Bereich des wenigstens einen Verkehrsweges überwacht. Dies kann durch einen Positionssensor und/oder einen Orientierungssensor festgestellt werden. Häufig werden Radarsensoren über und/oder neben der Fahrbahn, beispielsweise an Masten, Schildern oder Ampelanlagen, angeordnet. Insbesondere Ampeln werden oft auch hängend über der Kreuzung angeordnet, so dass sie vom Wind in Schwingungen versetzt werden können. Daher kann es von Vorteil sein, einen Geschwindigkeitssensor und/oder einen Beschleunigungssensor zu verwenden, um die Geschwindigkeit und/oder die Beschleunigung des Radarsensors zu ermitteln und bei Überschreiten vorbestimmter Grenzwerte ein Störkriterium als erfüllt anzusehen. Vorteilhafterweise sind Positions-, Orientierungs-, Geschwindigkeits- und/oder Beschleunigungssensoren für wenigstens zwei, bevorzugt alle drei unabhängigen Raumrichtungen vorhanden.

Vorzugsweise ist ein Störungskriterium erfüllt, wenn die Lage und/oder die Orientierung und/oder die Geschwindigkeit und/oder die Beschleunigung des Radarsensors um mehr als einen vorbestimmten Grenzwert von einem Sollwert abweicht.

Bei den Steuersignalen, die an das Steuerungsmodul der elektronischen Datenverarbeitungseinrichtung übermittelt werden, handelt es sich vorteilhafterweise um Anzahl, Positionen, Geschwindigkeitsvektoren, Dimensionen (räumliche Ausdehnung) und/oder Klassifikationen von Verkehrsteilnehmern (Objekten), die detektiert und aus den Peaks der Detektionsmatrix, beispielsweise einer Range-Doppler-Matrix ermittelt werden konnten, oder um eine Vorstufe mit Informationen über Entfernung, Winkel, Radialgeschwindigkeit und/oder weiteren Eigenschaften. Die gegebenenfalls zu übermittelnden Störungssignale können beispielsweise die Information enthalten, dass der wenigstens eine Radarsensor nicht oder nicht zuverlässig arbeitet. Das Steuerungsmodul der elektronischen Datenverarbeitungseinrichtung, das für die Steuerung des Verkehrsflusses zuständig ist, greift in diesem Fall auf ein anderes gegebenenfalls zeitgesteuertes Modell der Verkehrsführung und der Steuerung des Verkehrsflusses zurück. Alternativ dazu können die Steuerungssignale jedoch beispielsweise auch die Information enthalten, dass sämtliche Fahrspuren des zu überwachenden wenigstens einen Verkehrsweges belegt sind. In diesem Fall ist von Vorteil, wenn die Anzahl dem Steuerungsmodul übermittelten Verkehrsteilnehmer und der Daten dieser Verkehrsteilnehmer überschätzt wird, also mehr Verkehrsteilnehmer gemeldet werden, als tatsächlich vorhanden sind. Daher wird für den Fall, dass ein Störungskriterium als erfüllt angesehen wird, eine möglichst große Anzahl von Verkehrsteilnehmern auf möglichst vielen Fahrspuren und Richtungen gemeldet.

Die Signale, die aus den Ergebnissen der Auswertung im Auswertemodul und der Prüfung im Diagnosemodul generiert und dann an das Steuerungsmodul übermittelt werden, enthalten vorzugsweise Auswertesignale, die Informationen über die beim Auswerten der Range-Doppler-Matrix ermittelten Objekte enthalten, wenn kein Störungskriterium erfüllt ist. Vorzugsweise bestehen die Signale aus den Auswertesignalen, wenn kein Störungskriterium erfüllt ist. Die Auswertesignale enthalten beispielsweise die Liste aller Peaks beim Auswerten der Range-Doppler-Matrix, in der beispielsweise die Radialgeschwindigkeit und der Abstand von dem Radarsensor und gegebenenfalls weitere Eigenschaften des jeweiligen Objektes oder mehrerer Objekte enthalten sind. Die Auswertesignale können auch Belegt-Signale für virtuelle Induktionsschleifen enthalten, durch die einem Steuermodul eines Steuerungscomputers, der beispielsweise für die Steuerung der Schaltung einer Ampelanlage an einer Kreuzung verwendet wird, mitgeteilt wird, ob eine bestimmte Fahrspur belegt ist. Auch Trigger-Signale, die beispielsweise vor einem schnell herannahenden Verkehrsteilnehmer warnen, können in den Auswertesignalen enthalten sein.

Vorzugsweise enthalten die Signale zusätzlich zu den Auswertesignalen ein Diagnosesignal, welches die Information enthält, dass kein Störungskriterium erfüllt ist.

Vorzugsweise enthalten die Signale das Diagnosesignal, das die Information enthält, dass ein Störungskriterium erfüllt ist, wenn ein Störungskriterium erfüllt ist. Dieses Diagnosesignal kann ausschließlich aus dieser Information bestehen. Alternativ dazu beinhaltet das Diagnosesignal Informationen über die Störungsursache. Dies ist insbesondere dann möglich, wenn unterschiedliche Störungskriterien vorhanden sind, von denen nur eines oder wenige erfüllt sind. Auf diese Weise können unterschiedliche Störungsursachen, beispielsweise Regen, Schnee, Sturm oder eine Verschiebung des Sensors unterschieden werden. Das Diagnosesignal kann zudem Anteile der Störung beinhalten. So kann beispielsweise die Sichtweite des Radarsensors durch Regen nur eingeschränkt sein, sodass verlässliche Daten zwar noch erzeugt und an das Steuermodul übermittelt werden können, diese jedoch nur für einen begrenzten Abstand zum Radarsensor verlässlich sind. So kann das Diagnosesignal beispielsweise die Information enthalten, dass die Sichtweite des Radarsensors durch Regen oder Schnee auf einen bestimmten Anteil, beispielsweise 75 %, 50 % oder 25 % eingeschränkt ist.

Vorzugsweise beinhalten die Signale Auswertesignale über fiktive Ziele, wenn ein Störungskriterium erfüllt ist. So kann beispielsweise das Auswertesignal die Information enthalten, dass alle Fahrspuren belegt sind, obwohl dies der Auswertung der Range-Doppler-Matrix aufgrund einer Störung nicht zu entnehmen ist. Dies ist insbesondere dann von Vorteil, wenn das Steuerungsmodul Teil eines Steuercomputers ist, der ausschließlich mit entsprechenden Auswertesignalen in der Lage ist, beispielsweise die Verkehrsführung oder den Verkehrsfluss an dem wenigstens einen Verkehrsweg zu steuern. Insbesondere alte Steuercomputer sind nicht dafür vorgesehen, zusätzlich zu diesen Auswertesignalen Diagnosesignale zu erhalten, um über eine Funktionsstörung des Radarsensors informiert zu werden.

Vorzugsweise werden bei dem Verfahren mehrere Radarsensoren, beispielsweise vier Radarsensoren verwendet. Diese sind vorzugsweise an einer Kreuzung angeordnet, an der sich wenigstens zwei Verkehrswege treffen oder sich kreuzen. Die vier Sensoren überwachen dabei beispielsweise unterschiedliche Teile eines Verkehrsweges oder unterschiedliche Verkehrswege. Die Sendesignale und Empfangssignale aller Radarsensoren werden zu Range-Doppler-Matrizen verarbeitet und ausgewertet. Die Auswertesignalen werdenden einem Kreuzungscomputer, der das Steuerungsmodul enthält, übermittelt. Gegebenenfalls ist auch das Diagnosemodul Teil des Kreuzungscomputers. Dies ist jedoch nicht notwendig, da das Diagnosemodul auch in einem oder in jedem Radarsensor angeordnet sein kann.

In besonders bevorzugten Ausgestaltungen werden bei dem Verfahren mehrere Sensoren verwendet. Dadurch können unterschiedliche Teile eines Verkehrsweges und/oder unterschiedliche Verkehrswege überwacht und darauf befindliche Verkehrsteilnehmer detektiert werden. Bevorzugt werden in diesem Fall Sendesignale von jedem der Sensoren ausgesandt und Empfangssignale von jedem der Sensoren empfangen. Das Steuerungsmodul ist in diesem Fall vorzugsweise Teil eines Steuerungscomputers. Dies gilt vorzugsweise auch für das Diagnosemodul, das vorzugsweise die Detektionsmatrizen auswertet, die von allen Sensoren und den jeweiligen Signalen erzeugt und bereitgestellt werden.

In einem Auswertemodul wird vorzugsweise eine Liste aller Objekte, denen jeweils wenigstens ein Peak der Detektionsmatrix zugeordnet werden konnte, erstellt. Zusätzlich oder alternativ dazu werden Belegt-Signale für virtuelle Induktionsschleifen erzeugt oder andere Triggersignale, die für die Steuerung eines Verkehrsflusses notwendig oder zumindest hilfreich sind. Darunter fallen Signale, die Informationen über sich schnell nähernde Objekte und ähnliches enthalten.

Das Diagnosemodul erzeugt vorzugsweise ein Diagnosesignal, das beispielsweise aus die Information enthalten kann, dass einer oder alle verwendeten Sensoren gestört sind. Zusätzlich kann ein Grad der Störung und/oder eine Ursache für die Störung angegeben werden. Diese Informationen können beispielsweise enthalten, dass der Sensor durch eine erste Störungsursache, beispielsweise Regen, zu 35% gestört ist.

Die Erfindung löst die gestellte Aufgabe zudem durch einen Sensor zum Erfassen von Verkehrsteilnehmern entlang wenigstens eines Verkehrsweges, wobei der Sensor eingerichtet ist, zum Durchführen eines Verfahrens nach einem der hier beschriebenen Ausführungsbeispiele. Der Sensor verfügt vorzugsweise über eine elektronische Datenverarbeitungseinrichtung mit einem Auswertemodul und vorzugsweise einem Diagnosemodul.

Mit Hilfe der beiliegenden Figur wird nachfolgend ein Ausführungsbeispiel der vorliegenden Erfindung näher erläutert. Es zeigt:
- Figur 1: - die schematische Darstellung einer Vorrichtung gemäß einem Ausführungsbeispiel der vorliegenden Erfindung,
- Figur 2: - die schematische Auswertung nach dem Abstand von Objekten,
- Figur 3: - die schematische Auswertung nach der radialen Geschwindigkeit und der Reflektivität von Objekten und
- Figur 4: - die schematische Darstellung der Überprüfung eines Störungskriteriums.

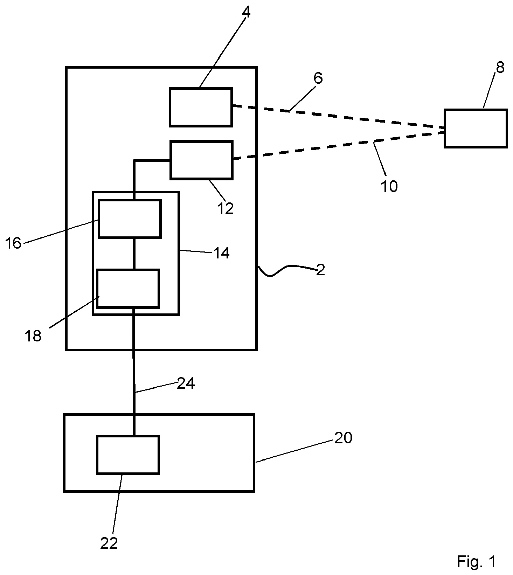

Figur 1 zeigt schematisch einen Radarsensor 2, der über eine Sendeeinrichtung 4 verfügt. Die Sendeeinrichtung 4 ist eingerichtet, Sendesignale 6 auszusenden. Diese werden in Figur 1 von einem Verkehrsteilnehmer 8 reflektiert und in Form von Empfangssignalen 10 in Richtung auf den Radarsensor 2 reflektiert. Bei dem Verkehrsteilnehmer 8 kann es sich beispielsweise um Fußgänger, Radfahrer, einen Pkw, einen Lastkraftwagen oder einen sonstigen Verkehrsteilnehmer handeln.

Der Radarsensor 2 verfügt über eine Empfangseinrichtung 12, die eingerichtet ist, die Empfangssignale 10 zu detektieren. Im in Figur 1 gezeigten Ausführungsbeispiel verfügt der Radarsensor zudem über eine elektronische Datenverarbeitungseinrichtung 14. Diese verfügt über ein Auswertemodul 16 und ein Diagnosemodul 18. Es ist von Vorteil, jedoch nicht zwangsläufig nötig, dass das Auswertemodul 16 und das Diagnosemodul 18 Teil der gleichen elektronischen Datenverarbeitungseinrichtung 14 sind oder dass die elektronische Datenverarbeitungseinrichtung 14 Teil des Radarsensors 2 ist.

Von der Empfangseinrichtung 12 werden die empfangenen Empfangssignale 10 dem Auswertemodul 16 zugeführt. Dort wird die Detektionsmatrix errechnet und ausgewertet. Im Diagnosemodul 18 wird geprüft, ob ein Störungskriterium erfüllt ist. Aus den Ergebnissen der Auswertung im Auswertemodul 16 und der Prüfung im Diagnosemodul 18 werden anschließend Signale generiert, die einer weiteren elektronischen Datenverarbeitungseinrichtung 20 übermittelt werden. Diese verfügt über ein Steuerungsmodul 22, dem die Signale entlang einer Datenverbindung 24 übermittelt werden. Das Steuerungsmodul 22 der elektronischen Datenverarbeitungseinrichtung 20 ist eingerichtet, beispielsweise den Verkehrsfluss entlang eines Verkehrsweges zu steuern, indem beispielsweise eine Ampelanlage, Verkehrszeichen oder sonstige den Verkehrsfluss beeinflussende Maßnahmen geschaltet oder getroffen werden.

In einer bevorzugten Ausgestaltung ist auch die elektronische Datenverarbeitungseinrichtung 20 Teil des Radarsensors 2. Besonders bevorzugt handelt es sich bei der elektronischen Datenverarbeitungseinrichtung 14 und der elektronischen Datenverarbeitungseinrichtung 20 um ein und dieselbe elektronische Datenverarbeitungseinrichtung, so dass das Auswertemodul 16, das Diagnosemodul 18 und das Steuerungsmodul 22 Teil einer einzigen Datenverarbeitungseinrichtung sind.

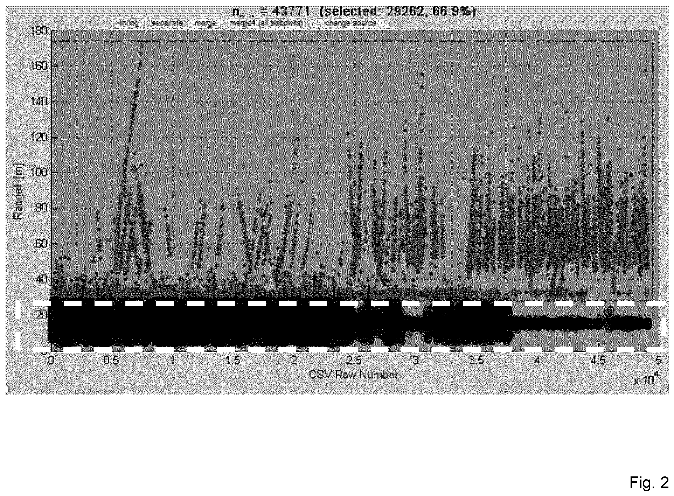

Figur 2 zeigt ein Ergebnis der Auswertung einer Detektionsmatrix, wobei für verschiedene Messzyklen der Abstand (Range) aufgetragen ist. Man erkennt in Bereich kleiner Abstände vom Sensor bis zu 25 m eine Vielzahl von erkannten Objekten, die zur besseren Übersichtlichkeit schwarz dargestellt sind. Der gestrichelt dargestellte weiße Rahmen markiert diese Objekte. Aus der Auswertung über den Abstand lässt sich folglich ermitteln, dass im gezeigten Ausführungsbeispiel in einem sehr kleinen Abstand zum eigentlichen Sensor eine Vielzahl von Objekten vorhanden ist.

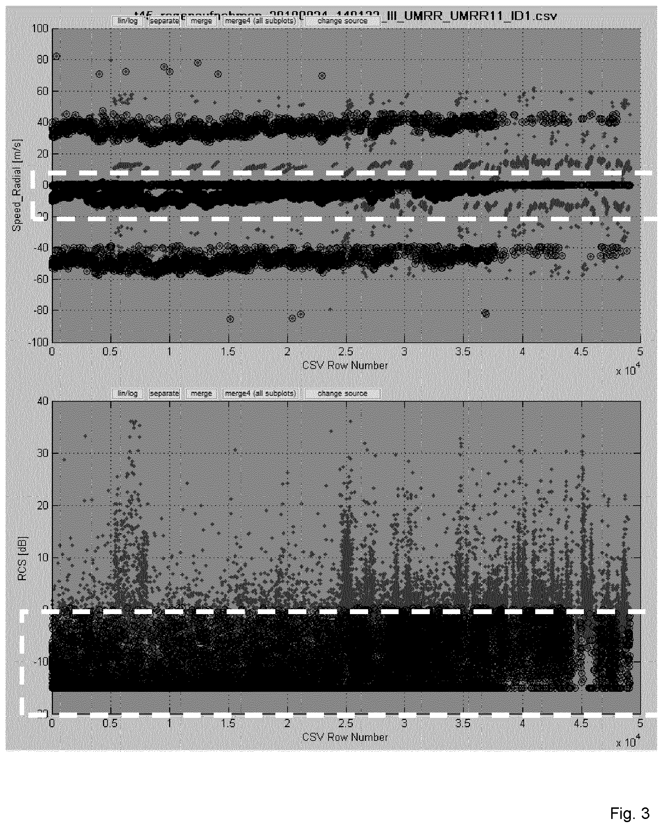

Figur 3 zeigt eine andere Auswertung oder einen anderen Teil der Auswertung der Detektionsmatrix. Im oberen Bereich ist die Radialgeschwindigkeit, also die Geschwindigkeit der Objekte auf den Sensor zu oder von dem Sensor weg dargestellt. Auch hier findet sich im Bereich kleiner Geschwindigkeiten eine große Anzahl von Objekten. Der relevante Geschwindigkeitsbereich der Objekte mit Radialgeschwindigkeiten von beispielsweise weniger als 10 m/s ist wieder durch einen weiß dargestellten gestrichelten Rahmen hervorgehoben.

Im unteren Bereich der Figur 3 ist die Reflektivität, die ein direktes Maß für den Radarquerschnitt eines Objektes ist, für eine Vielzahl unterschiedlicher Messzyklen aufgetragen. Auch hier erkennt man eine Häufung von Objekten in einem Bereich, bei dem der Radarquerschnitt kleiner als 0 dBm² beträgt. Die Ergebnisse der drei Darstellungen in den Figuren 2 und 3 erlauben folglich, eine Vielzahl von Objekten zu identifizieren, die einen sehr geringen Radarquerschnitt aufweisen, sich in einem geringen Abstand vom Sensor befinden und eine geringe Radialgeschwindigkeit aufweisen. Im gezeigten Ausführungsbeispiel können die Objekte als Regen identifiziert werden.

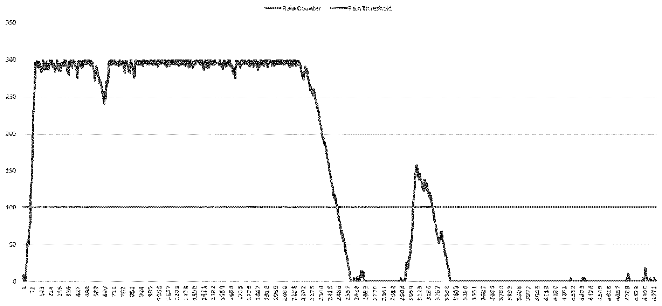

Für die Funktionsfähigkeit des Sensors ist dabei jedoch entscheidend, dass der Regen eine bestimmte Stärke aufweist. Dies kann dadurch ermittelt werden, dass die einzelnen "Regenobjekte", die den Auswertungen der Figuren 2 und 3 entnommen werden können, gezählt werden. Überschreitet die Anzahl der so ermittelten Regenobjekte eine vorbestimmte Grenze, ist der Regen als so stark anzunehmen, dass die Funktionsfähigkeit des Sensors beeinträchtigt wird. Dies ist Figur 4 zu entnehmen. Der im gezeigten Ausführungsbeispiel gesetzte Grenzwert liegt bei 100 Objekten. Werden mehr Objekte erfasst, liegt die blau dargestellte Linie oberhalb des gesetzten Grenzwertes und die Funktionsfähigkeit des Sensors muss als eingeschränkt angenommen werden. Dies ist im gezeigten Ausführungsbeispiel beispielsweise bis zum Messzyklus 2450 der Fall. Liegt die gezählte Anzahl der Regenobjekte unterhalb des Grenzwertes, ist die Funktionsfähigkeit des Sensors nicht eingeschränkt, sodass kein Störungskriterium erfüllt ist. Im in Figur 4 gezeigten Ausführungsbeispiel ist ein Störungskriterium zwischen den Messzyklen 72 und 2450 sowie zwischen 3054 und 3267 erfüllt, dazwischen und danach jedoch nicht.

### Bezugszeichenliste

- 2: Radarsensor
- 4: Sendeeinrichtung
- 6: Sendesignale
- 8: Verkehrsteilnehmer
- 10: Empfangssignale
- 12: Empfangseinrichtung
- 14: elektronische Datenverarbeitungseinrichtung
- 16: Auswertemodul
- 18: Diagnosemodul
- 20: elektronische Datenverarbeitungseinrichtung
- 22: Steuerungsmodul
- 24: Datenverbindung

## Patentansprüche

1. Verfahren zum Erfassen von Verkehrsteilnehmern entlang wenigstens eines bekannten Bereiches eines Verkehrsweges mittels wenigstens eines Radarsensors, der wenigstens eine Sendeeinrichtung für Radarstrahlung und wenigstens eine Empfangseinrichtung für Radarstrahlung aufweist und über und/oder neben dem Verkehrsweg an einem Mast, einem Schild oder einer Ampelanlage angeordnet ist, sowie zum Erfassen einer Störung, in deren Fall eine Erfassung von Verkehrsteilnehmern nicht oder nicht optimal möglich ist, wobei das Verfahren die folgenden Schritte aufweist:
- Aussenden von Sendesignalen mittels der wenigstens einen Sendeeinrichtung für Radarstrahlung,
- Detektieren von Empfangssignalen mittels der wenigstens einen Empfangseinrichtung für Radarstrahlung,
- Mischen der Sendesignale und der Empfangssignale zu Basisbandsignalen und Errechnen einer Detektionsmatrix aus den Basisbandsignalen und Auswerten der Detektionsmatrix in einem Auswertemodul einer elektronischen Datenverarbeitungseinrichtung, wobei Peaks der Detektionsmatrix Objekten zugeordnet werden,
- Prüfen, ob ein Störungskriterium erfüllt ist, in einem Diagnosemodul, wobei die ausgewertete Detektionsmatrix und die Basisbandsignale herangezogen werden,
- Generieren von Signalen aus den Ergebnissen der Auswertung im Auswertemodul und der Prüfung im Diagnosemodul und
- Übermitteln der Signale an ein Steuerungsmodul einer elektronischen Datenverarbeitungseinrichtung.

2. Verfahren nach Anspruch 1, **dadurch gekennzeichnet, dass** ein Störungskriterium erfüllt ist, wenn beim Auswerten der Detektionsmatrix Regen und/oder Schnee detektiert wird.

3. Verfahren nach Anspruch 1 oder 2, **dadurch gekennzeichnet, dass** nacheinander eine Mehrzahl von Detektionsmatrizen ausgewertet werden, so dass Objekten eine Ist-Trajektorie zugeordnet werden kann und ein Störungskriterium erfüllt ist, wenn eine vorbestimmte Anzahl von Ist-Trajektorien nicht einem in einer elektronischen Datenbank hinterlegten Verlauf (Soll-Trajektorie) folgt.

4. Verfahren nach einem der vorstehenden Ansprüche, **dadurch gekennzeichnet, dass** ein maximales, ein minimales, ein mittleres Signal-zu-Rausch-Verhältnis und/oder der Median des Signal-zu-Rausch-Verhältnisses aus den Signal-zu-Rausch-Verhältnissen ausgewählter Peaks der Detektionsmatrix ermittelt wird, und ein Störungskriterium erfüllt ist, wenn das maximale, das minimale, das mittlere Signal-zu-Rausch-Verhältnis und/oder der Median des Signal-zu-Rausch-Verhältnisses einen vorbestimmten Grenzwert unterschreitet, wobei der vorbestimmte Grenzwert vorzugsweise 100 dB, bevorzugt 50 dB, besonders bevorzugt 20 dB beträgt.

5. Verfahren nach einem der vorstehenden Ansprüche, **dadurch gekennzeichnet, dass** bei der Auswertung der Detektionsmatrix ein Radarquerschnitt ausgewählter Objekte, vorzugsweise ausgewählter sich bewegenden Objekte ermittelt wird und ein Störungskriterium erfüllt ist, wenn ein maximaler, ein minimaler und/oder ein durchschnittlicher Radarquerschnitt und/oder der Median aus den ermittelten Radarquerschnitten kleiner als ein vorbestimmter Grenzwert ist.

6. Verfahren nach einem der vorstehenden Ansprüche, **dadurch gekennzeichnet, dass** die wenigstens eine Empfangseinrichtung mehrere Empfangsantennen, vorzugsweise wenigstens drei Empfangsantennen, aufweist und für ausgewählte Peaks oder Objekte eine Standardabweichung der Phasendifferenzen zwischen jeweils zwei Empfangsantennen, vorzugsweise in Azimutal- und/oder in Elevationsrichtung, berechnet wird, und ein Störungskriterium erfüllt ist, wenn eine größte, eine kleinste und/oder eine mittlere Standardabweichung und/oder der Median der ermittelten Standardabweichungen einen vorbestimmten Grenzwert überschreitet, wobei der vorbestimmte Grenzwert vorzugsweise 60°, bevorzugt 30°, besonders bevorzugt 5° beträgt.

7. Verfahren nach einem der vorstehenden Ansprüche, **dadurch gekennzeichnet, dass** die Anzahl der Objekte bestimmt wird, denen wenigstens ein Peak der Detektionsmatrix zugeordnet wurde, und ein Störungskriterium erfüllt ist, wenn die Anzahl einen vorbestimmten oberen Grenzwert überschreitet, wobei der vorbestimmte obere Grenzwert beispielsweise 150, bevorzugt 100, besonders bevorzugt 75 beträgt, oder wenn die Anzahl einen vorbestimmten unteren Grenzwert unterschreitet, der vorzugsweise 10, bevorzugt 20, besonders bevorzugt 30 beträgt.

8. Verfahren nach einem der vorstehenden Ansprüche, **dadurch gekennzeichnet, dass** ein Störungskriterium erfüllt ist, wenn eine Interferenzintensität der Empfangssignale, die nicht aus reflektierten Sendesignalen besteht, einen vorbestimmten Grenzwert überschreitet.

9. Verfahren nach einem der Ansprüche 3 bis 8, **dadurch gekennzeichnet, dass** ein Störungskriterium erfüllt ist, wenn eine gewichtete Summe
- des maximalen, des minimalen, des mittleren Signal-zu-Rausch-Verhältnisses und/oder des Medians des Signal-zu-Rausch-Verhältnisses,
- des maximalen, des minimalen, des mittleren Radarquerschnittes und/oder des Medians des Radarquerschnittes ,
- der maximalen, der minimalen, der mittleren Standardabweichung und/oder des Medians der Standardabweichung,
- einer Abweichung der Ist-Trajektorien von Soll-Trajektorien,
- einer Interferenzintensität und/oder
- der Anzahl der Objekte
einen vorbestimmten Grenzwert überschreitet oder unterschreitet.

10. Verfahren nach einem der vorstehenden Ansprüche, **dadurch gekennzeichnet, dass** die wenigstens eine Sendeeinrichtung und die wenigstens eine Empfangseinrichtung Teile eines Radarsensors sind und durch wenigstens einen Sensor die Position und/oder die Orientierung und/oder die Geschwindigkeit und/oder die Beschleunigung des Radarsensors bestimmt wird.

11. Verfahren nach Anspruch 10, **dadurch gekennzeichnet, dass** ein Störungskriterium erfüllt ist, wenn die Lage und/oder die Orientierung und/oder die Geschwindigkeit und/oder die Beschleunigung des Radarsensors um mehr als einen vorbestimmten Grenzwert von einem Sollwert abweichen.

12. Verfahren nach einem der vorstehenden Ansprüche, **dadurch gekennzeichnet, dass** die Signale Auswertesignale enthalten, die Informationen über die beim Auswerten der Detektionsmatrix ermittelten Objekte enthalten, wenn kein Störungskriterium erfüllt ist.

13. Verfahren nach Anspruch 11, **dadurch gekennzeichnet, dass** die Signale zusätzlich zu den Auswertesignalen ein Diagnosesignal enthalten, das die Information enthält, dass kein Störungskriterium erfüllt ist.

14. Verfahren nach einem der vorstehenden Ansprüche, **dadurch gekennzeichnet, dass** die Signale das Diagnosesignal enthalten, das die Information enthält, dass ein Störungskriterium erfüllt ist, wenn ein Störungskriterium erfüllt ist, wobei die Signale dann vorzugsweise keine Informationen über die Objekte enthalten.

15. Verfahren nach einem der vorstehenden Ansprüche, **dadurch gekennzeichnet, dass** die Signale Auswertesignale über fiktive Objekte enthalten, wenn ein Störungskriterium erfüllt ist.

16. Sensor zum Erfassen von Verkehrsteilnehmern entlang wenigstens eines bekannten Bereiches eines Verkehrsweges mittels wenigstens eines Radarsensors und zum Erfassen einer Störung, in deren Fall eine Erfassung nicht oder nicht optimal möglich ist, der wenigstens eine Sendeeinrichtung für Radarstrahlung, wenigstens eine Empfangseinrichtung für Radarstrahlung, ein Auswertemodul und ein Diagnosemodul aufweist, wobei der Sensor eingerichtet ist, zum Durchführen eines Verfahrens nach einem der vorstehenden Ansprüche.

17. Sensor nach Anspruch 16, **dadurch gekennzeichnet, dass** der Sensor eine elektronische Datenverarbeitungseinrichtung mit dem Auswertemodul und dem Diagnosemodul aufweist.

## Claims

1. A method for detecting road users along at least one known area of a traffic route, using at least one radar sensor comprising at least one transmission device for radar radiation and at least one reception device for radar radiation, wherein the sensor is placed above and/or besides the roadway on poles, signs or traffic lights, and for detecting a disturbance, during which the detection of road users is not or not to an optimum degree possible, wherein the method comprises the following steps:
- emitting transmission signals by means of the at least one transmission device for radar radiation,
- detecting received signals by means of the at least one reception device for radar radiation,
- mixing the transmission signals and the received signals to produce baseband signals and calculating a detection matrix from the baseband signals and evaluating the detection matrix in an evaluation module of an electronic data processing device, wherein peaks of the detection matrix are assigned to objects,
- checking whether a disturbance criterion is met in a diagnostic module, wherein the detection matrix and the baseband signals are used,
- generating signals from the results of the evaluation in the evaluation module and the check in the diagnostic module, and
- transmitting the signals to a control module of an electronic data processing device.

2. The method according to claim 1, **characterized in that** a disturbance criterion is met when rain and/or snow is detected during evaluation of the detection matrix.

3. The method according to claim 1 or 2, **characterized in that** a plurality of detection matrices are successively evaluated so that objects can be assigned an actual trajectory and a disturbance criterion is met when a predetermined number of actual trajectories do not follow a course (target trajectory) stored in an electronic database.

4. The method according to one of the preceding claims, **characterized in that** a maximum, a minimum, an average signal-to-noise ratio and/or the median of the signal-to-noise ratio is detected from the signal-to-noise ratios of selected peaks of the detection matrix, and a disturbance criterion is met when the maximum, the minimum, the average signal-to-noise ratio and/or the median of the signal-to-noise ratio is below a predetermined limit, the predetermined limit preferably being 100 dB, preferably 50 dB, especially preferably 20 dB.

5. The method according to one of the preceding claims, **characterized in that** during the evaluation of the detection matrix a radar cross-section of selected objects, preferably selected moving objects, is determined and a disturbance criterion is met when a maximum, minimum and/or average radar cross-section and/or the median from the determined radar-cross sections is smaller than a predetermined limit.

6. The method according to one of the preceding claims, **characterized in that** the at least one reception device has a plurality of receiving antennae, preferably at least three receiving antennae, and a standard deviation of the phase differences between each two receiving antennae, preferably in the azimuthal direction and/or in the elevation direction, is calculated for selected peaks or objects, and a disturbance criterion is met if a largest, a smallest and/or an average standard deviation and/or the median of the determined standard deviations exceeds a predetermined limit, the predetermined limit preferably being 60°, preferably 30°, particularly preferably 5°.

7. The method according to one of the preceding claims, **characterized in that** the number of objects to which at least one peak of the detection matrix has been assigned is determined, and a disturbance criterion is met if the number exceeds a predetermined upper limit, the predetermined upper limit being, for example, 150, preferably 100, particularly preferably 75, or if the number falls below a predetermined lower limit, which is preferably 10, preferably 20, particularly preferably 30.

8. The method according to one of the preceding claims, **characterized in that** a disturbance criterion is met when an interference intensity of the received signals not consisting of reflected transmission signals exceeds a predetermined limit.

9. The method according to one of claims 3 to 8, **characterized in that** a disturbance criterion is met if a weighted sum of
- the maximum, minimum, average signal-to-noise ratio and/or the median of the signal-to-noise ratio,
- the maximum, minimum, average radar cross-section and/or the median of the radar cross-section,
- the maximum, minimum, average standard deviation and/or the median of the standard deviation,
- a deviation of the actual trajectories from target trajectories,
- an interference intensity and/or
- the number of the objects
exceeds or is below a predetermined limit.

10. The method according to one of the preceding claims, **characterized in that** the at least one transmission device and the at least one reception device are parts of a radar sensor and the position and/or the orientation and/or the velocity and/or the acceleration of the radar sensor is determined by at least one sensor.

11. The method according to claim 10, **characterized in that** a disturbance criterion is met when the position and/or orientation and/or velocity and/or acceleration of the radar sensor deviates from a target value by more than a predetermined limit.

12. The method according to one of the preceding claims, **characterized in that** the signals contain evaluation signals containing information about the objects detected during evaluation of the detection matrix when no disturbance criterion is met.

13. The method according to claim 11, **characterized in that** the signals contain a diagnostic signal in addition to the evaluation signals, which contains the information that no disturbance criterion is met.

14. The method according to one of the preceding claims, **characterized in that** the signals contain the diagnostic signal containing the information that a disturbance criterion is met when a disturbance criterion is met, the signals then preferably containing no information about the objects.

15. The method according to one of the preceding claims, **characterized in that** the signals contain evaluation signals about fictitious objects when a disturbance criterion is met.

16. A sensor for detecting road users along at least one known area of a traffic route, using at least one radar sensor, and for detecting a disturbance, during which the detection of road users is not or not to an optimum degree possible, the radar sensor comprising at least one transmission device for radar radiation and at least one reception device for radar radiation, an evaluation module and a diagnostic module, the sensor being configured to conduct a method according to one of the preceding claims.

17. The sensor according to claim 16, **characterized in that** the sensor comprises an electronic data processing device with the evaluation module and the diagnostic module.

## Revendications

1. Procédé pour détecter des usagers de la voie publique le long d'au moins une zone connue d'une voie de circulation au moyen d'au moins un capteur radar qui comprend au moins un dispositif d'émission pour rayonnement radar et au moins un dispositif de réception pour rayonnement radar et qui est placé au-dessus et/ou à côté de la voie de circulation sur un poteau, un panneau ou un feu de signalisation, et pour détecter une perturbation lors de laquelle une détection d'usagers de la voie publique n'est pas possible ou n'est pas possible de façon optimale, le procédé comprenant les étapes suivantes consistant à :
- émettre des signaux d'émission au moyen dudit au moins un dispositif d'émission pour rayonnement radar,
- détecter des signaux de réception au moyen dudit au moins un dispositif de réception pour rayonnement radar,
- mélanger les signaux d'émission et les signaux de réception en signaux de bande de base, et calculer une matrice de détection à partir des signaux de bande de base, et évaluer la matrice de détection dans un module d'évaluation d'un dispositif électronique de traitement de données, les pics de la matrice de détection étant associés à des objets,
- vérifier dans un module de diagnostic si un critère de perturbation est satisfait, en ayant recours à la matrice de détection évaluée et aux signaux de bande de base,
- générer des signaux à partir des résultats de l'évaluation dans le module d'évaluation et à partir de la vérification dans le module de diagnostic, et
- transmettre les signaux à un module de commande d'un dispositif électronique de traitement des données.

2. Procédé selon la revendication 1,
**caractérisé en ce qu'**un critère de perturbation est satisfait si de la pluie et/ou de la neige est détectée lors de l'évaluation de la matrice de détection.

3. Procédé selon la revendication 1 ou 2,
**caractérisé en ce qu'**une pluralité de matrices de détection sont évaluées les unes après les autres, de sorte qu'une trajectoire réelle peut être associée à des objets et qu'un critère de perturbation est satisfait si un nombre prédéterminé de trajectoires réelles ne suit pas un tracé (trajectoire de consigne) stocké dans une base de données électronique.

4. Procédé selon l'une des revendications précédentes,
**caractérisé en ce qu'**un rapport signal/bruit maximal, minimal, moyen et/ou la médiane du rapport signal/bruit est déterminé(e) à partir des rapports signal/bruit de pics sélectionnés de la matrice de détection, et un critère de perturbation est satisfait si le rapport signal/bruit maximal, minimal, moyen et/ou la médiane du rapport signal/bruit est inférieur(e) à une valeur limite prédéterminée, la valeur limite prédéterminée étant de préférence de 100 dB, de préférence de 50 dB, de manière particulièrement préférée de 20 dB.

5. Procédé selon l'une des revendications précédentes,
**caractérisé en ce que**, lors de l'évaluation de la matrice de détection, on détermine une surface équivalente radar d'objets sélectionnés, de préférence d'objets en mouvement sélectionnés, et un critère de perturbation est satisfait si une surface équivalente radar maximale, minimale et/ou moyenne et/ou la médiane des surfaces équivalentes radar déterminées est inférieure à une valeur limite prédéterminée.

6. Procédé selon l'une des revendications précédentes,
**caractérisé en ce que** ledit au moins un dispositif de réception comprend plusieurs antennes de réception, de préférence au moins trois antennes de réception, et **en ce que**, pour des pics ou des objets sélectionnés, on calcule un écart-type des différences de phase entre deux antennes de réception respectives, de préférence dans la direction azimutale et/ou dans la direction d'élévation, et un critère de perturbation est satisfait si un écart-type maximal, minimal et/ou moyen et/ou la médiane des écarts-types déterminés dépasse vers le haut une valeur limite prédéterminée, la valeur limite prédéterminée étant de préférence de 60°, de préférence de 30°, de manière particulièrement préférée de 5°.

7. Procédé selon l'une des revendications précédentes,
**caractérisé en ce que** l'on détermine le nombre d'objets auxquels au moins un pic de la matrice de détection a été associé, et un critère de perturbation est satisfait si le nombre dépasse vers le haut une valeur limite supérieure prédéterminée, la valeur limite supérieure prédéterminée étant par exemple de 150, de préférence de 100, de manière particulièrement préférée de 75, ou si le nombre dépasse vers le bas une valeur limite inférieure prédéterminée qui est de préférence de 10, de préférence de 20, de manière particulièrement préférée de 30.

8. Procédé selon l'une des revendications précédentes,
**caractérisé en ce qu'**un critère de perturbation est satisfait si une intensité d'interférence des signaux de réception, qui n'est pas constituée de signaux d'émission réfléchis, dépasse vers le haut une valeur limite prédéterminée.

9. Procédé selon l'une des revendications 3 à 8,
**caractérisé en ce qu'**un critère de perturbation est satisfait si une somme pondérée
- du rapport signal/bruit maximal, minimal, moyen et/ou de la médiane du rapport signal/bruit,
- de la surface équivalente radar maximale, minimale, moyenne et/ou de la médiane de la surface équivalente radar,
- de l'écart-type maximal, minimal, moyen et/ou de la médiane de l'écart-type,
- d'un écart entre les trajectoires réelles et les trajectoires de consigne,
- d'une intensité d'interférence et/ou
- du nombre d'objets
dépasse vers le haut ou vers le bas une valeur limite prédéterminée.

10. Procédé selon l'une des revendications précédentes,
**caractérisé en ce que** ledit au moins un dispositif d'émission et ledit au moins un dispositif de réception font partie d'un capteur radar, et la position et/ou l'orientation et/ou la vitesse et/ou l'accélération du capteur radar est déterminée par au moins un capteur.

11. Procédé selon la revendication 10,
**caractérisé en ce qu'**un critère de perturbation est satisfait si la localisation et/ou l'orientation et/ou la vitesse et/ou l'accélération du capteur radar s'écartent d'une valeur de consigne de plus d'une valeur limite prédéterminée.

12. Procédé selon l'une des revendications précédentes,
**caractérisé en ce que** les signaux contiennent des signaux d'évaluation qui contiennent des informations sur les objets déterminés lors de l'évaluation de la matrice de détection, si aucun critère de perturbation n'est satisfait.

13. Procédé selon la revendication 11,
**caractérisé en ce que** les signaux contiennent, en plus des signaux d'évaluation, un signal de diagnostic qui contient l'information selon laquelle aucun critère de perturbation n'est satisfait.

14. Procédé selon l'une des revendications précédentes,
**caractérisé en ce que** les signaux contiennent le signal de diagnostic qui contient l'information selon laquelle un critère de perturbation est satisfait si un critère de perturbation est satisfait, les signaux ne contenant alors de préférence aucune information sur les objets.

15. Procédé selon l'une des revendications précédentes,
**caractérisé en ce que** les signaux contiennent des signaux d'évaluation concernant des objets fictifs, si un critère de perturbation est satisfait.

16. Capteur pour détecter des usagers de la voie publique le long d'au moins une zone connue d'une voie de circulation au moyen d'au moins un capteur radar, et pour détecter une perturbation lors de laquelle une détection n'est pas possible ou n'est pas possible de façon optimale, comprenant au moins un dispositif d'émission pour rayonnement radar, au moins un dispositif de réception pour rayonnement radar, un module d'évaluation et un module de diagnostic, le capteur étant conçu pour mettre en oeuvre un procédé selon l'une des revendications précédentes.

17. Capteur selon la revendication 16,
**caractérisé en ce que** le capteur comprend un dispositif électronique de traitement de données comprenant le module d'évaluation et le module de diagnostic.
